# DEMANDE DE BREVET EUROPEEN

(11) **EP 1 138 538 A1**
(43) Date de publication de la demande: **04.10.2001**
(21) Numéro de dépôt: 01400797.5
(22) Date de dépôt: 28.03.2001
(51) Int. Cl.: B60J 10/08, B60J 10/00

(54) **Nouveau joint d'étanchéité pour ouvrant de véhicule automobile**

(30) Priorité: 30.03.2000 FR 0004041
(71) Demandeur: Société Anonyme dite: BTR Sealing Systems France, 92000 Nanterre (FR)
(72) Inventeur: Muga, Félix, 26002 Logrono (ES)
(74) Mandataire: Jolly, Jean-Pierre

(57) **Abrégé**

Selon l'invention, à l'intérieur du premier profilé tubulaire (5) est logé un second profilé tubulaire (7) de plus petites dimensions, en un matériau déformable élastiquement, attenant par au moins une cloison (9) à une portion du premier profilé tubulaire (5), le second profilé tubulaire (7) étant destiné à être comprimé en se déformant sous la sollicitation de l'ouvrant, en position de fermeture de celui-ci, au moins un orifice (6, 10) étant ménagé dans ce but dans les parois du premier et du second profilés tubulaires.

## Description

La présente invention concerne un joint d'étanchéité pour ouvrant de véhicule automobile, tel que coffre, hayon, custode, porte ou autre.

De tels joints pour ouvrants comprennent généralement :
- un profilé formant pince à section en U, en élastomère ou en plastomère, comportant le plus souvent une armature rigide et destiné à coiffer et pincer une partie de l'encadrement de l'ouverture de la carrosserie de l'automobile associée à cet ouvrant, ou un moyen similaire de fixation sur cet encadrement ;
- et au moins un profilé tubulaire en un matériau déformable élastiquement, généralement un matériau cellulaire, attenant par exemple à une branche latérale ou à la base du profilé à section en U et faisant saillie vers l'extérieur à partir de l'encadrement de l'ouverture associée à l'ouvrant, en vue d'être comprimé entre ce dernier et l'encadrement, en position de fermeture de l'ouvrant, pour assurer l'étanchéité du véhicule.

Le profilé à section en U et le profilé tubulaire sont habituellement en des matériaux thermoplastiques ou élastomériques et sont réalisés par coextrusion.

Outre son rôle d'organe d'étanchéité, lorsqu'il est comprimé par l'ouvrant, en position de fermeture de celui-ci, le profilé tubulaire a aussi une fonction d'insonorisation de l'habitacle du véhicule.

De nombreuses formes de réalisation de tels joints sont connues dans la technique et toutes visent généralement à améliorer leurs propriétés insonorisantes sans trop altérer l'aptitude à la déformation du profilé tubulaire.

Ces joints épousent cependant difficilement la forme des ouvrants ou des encadrements des ouvertures de la carrosserie auxquels ils sont associés, en particulier dans leurs parties fortement incurvées (parties d'angle).

On connaît par ailleurs, par EP 0 622 261 A, un joint d'étanchéité pour encadrement d'un ouvrant d'automobile, qui comprend une partie à section en U formant pince, destinée à coiffer en la pinçant une partie en saillie de l'encadrement, et un profilé tubulaire, attenant à cette partie formant pince et dans lequel est logé un second profilé tubulaire, qualifié de "noyau central interne", qui est solidaire de la paroi interne du premier profilé par une pluralité de membranes de raccordement. Ce second profilé est destiné à conférer une certaine rigidité au premier profilé tubulaire " en supprimant toute déformation susceptible de nuire à l'aspect esthétique du dispositif " (voir col. 1, 1.31-32 du document cité) et à éviter " la formation de plis au niveau de la courbure C de l'élément tubulaire " (voir col 2, 1.38-40). Aucun orifice n'est donc prévu dans les parois du premier et du second profilé, en vue de permettre une libre circulation de l'air ambiant vers l'extérieur et vers l'intérieur de ces profilés, suivant que l'ouvrant arrive en position de fermeture ou est amené en position d'ouverture.

L'invention vise à proposer un nouveau joint du type général mentionné ci-dessus, qui épouse beaucoup plus facilement, même dans les parties d'angle à forte courbure, la forme des ouvrants ou des encadrements des ouvertures de carrosserie auxquels il est associé.

La présente invention vise également à proposer un tel joint qui assure un renforcement de l'insonorisation de l'habitacle du véhicule dont il équipe des ouvrants ou des ouvertures de carrosserie.

L'invention a enfin pour but de proposer un joint d'étanchéité apte à opposer une résistance accrue à la fermeture de l'ouvrant, afin que celui-ci présente une prédéformation en position fermée, qui lui permet de mieux résister aux contraintes qu'il subit, du fait d'une dépression externe, à des vitesses élevées de déplacement du véhicule.

A cet effet l'invention a pour objet un joint d'étanchéité destiné à équiper un ouvrant d'un véhicule automobile ou un encadrement d'une ouverture de la carrosserie associée à cet ouvrant, ce joint comprenant au moins un premier profilé tubulaire en un matériau déformable élastiquement, attenant à la base ou à une aile latérale d'une partie à section transversale en U formant pince, en élastomère ou en plastomère, destinée à coiffer un rebord saillant de l'ouvrant ou respectivement de l'encadrement de l'ouverture associée, avec le premier profilé tubulaire faisant saillie, respectivement, en direction de l'encadrement de l'ouverture ou de l'ouvrant, de manière à être comprimé en se déformant entre ces deux organes en position de fermeture de l'ouvrant, un second profilé tubulaire de plus petites dimensions, en un matériau déformable élastiquement, étant logé à l'intérieur du premier profilé tubulaire et étant attenant par au moins une cloison à au moins une portion de celui-ci, le second profilé tubulaire étant lui aussi destiné à être comprimé en se déformant sous la sollicitation de l'ouvrant, en position de fermeture de celui-ci, ce profilé étant caractérisé en ce qu'au moins un orifice est ménagé dans la paroi du premier profilé tubulaire, tandis qu'au moins un orifice est ménagé dans la paroi du second profilé tubulaire, pour permettre le passage de l'air vers l'intérieur ou l'extérieur des profilés.

En choisissant judicieusement la position, la forme et les dimensions du second profilé tubulaire, à l'intérieur du premier profilé tubulaire, et la position et les dimensions de la ou les cloisons qui le réunissent au premier profilé tubulaire, il est possible d'amener le second profilé tubulaire à venir se placer de lui-même dans une position épousant parfaitement le profil de l'ouvrant ou de l'encadrement de l'ouverture associée de la carrosserie, même dans leurs parties d'angle à forte courbure.

On notera que le second profilé tubulaire peut s'étendre suivant toute la longueur du premier profilé tubulaire ou être présent suivant une partie seulement de la longueur de celui-ci, suivant l'effet recherché.

La partie du premier profilé, ou la partie de ce premier profilé et celle de la partie formant pince du joint, auxquelles les cloisons sont respectivement attenantes, peuvent être sensiblement opposées, mais elles peuvent aussi être simplement décalées transversalement.

Dans une forme de réalisation avantageuse du joint conforme à l'invention, le second profilé tubulaire est attenant par une unique cloison à une portion du premier profilé tubulaire opposée à la portion de la partie formant pince à laquelle ce premier profilé est attenant. Le second profilé est ainsi monté " flottant " à l'intérieur du premier profilé, ce qui lui permet de se placer de lui-même de la façon la plus appropriée, en particulier dans les angles de l'ouvrant ou de l'encadrement de porte.

Dans une autre forme de réalisation avantageuse, le second profilé est attenant par deux cloisons à deux portions distinctes du premier profilé, ou à une portion de celui-ci et à une partie de la base ou de la branche de la partie formant pince à laquelle est attenant le premier profilé tubulaire. Les deux cloisons peuvent être disposées sensiblement dans un même plan ou être décalées transversalement l'une par rapport à l'autre.

On remarquera qu'en position de fermeture de l'ouvrant, lorsque le premier et second profilés tubulaires sont comprimés par celui-ci, le second profilé et la ou les cloisons attenantes sont comprimées à l'intérieur du premier profilé et forment une barrière additionnelle au passage des ondes sonores, ce qui améliore de façon sensible l'insonorisation de l'habitacle du véhicule.

Pour renforcer encore cet effet insonorisant, sans nuire à l'aptitude à la déformation du premier et du deuxième profilés tubulaires, une pellicule en un matériau différent de celui les constituant, ou en le même matériau, mais avec des propriétés physiques différentes, gaine localement la surface interne et/ou la surface externe d'au moins l'un de ces profilés, suivant une partie seulement de sa section transversale et de sa longueur, comme décrit par la Demanderesse dans la demande de brevet français N° 00 01655, déposée le 10 Février 2000, non encore publiée à la date de dépôt de la présente demande de brevet.

De façon connue, un troisième profilé tubulaire en un matériau déformable élastiquement peut également être attenant extérieusement au premier profilé, en une position telle que lui aussi puisse être comprimé et déformé par l'ouvrant, en position de fermeture de celui-ci et sa paroi sera dans ce but percée d'au moins un orifice. En vue d'améliorer l'insonorisation du véhicule, ce troisième profilé peut également être gainé localement, sur sa surface externe et/ou sur sa surface interne, d'une pellicule en un matériau différent de celui dont il est constitué, ou en le même matériau, mais avec des propriétés physiques différentes, cette pellicule ne s'étendant que suivant une partie de la section transversale et de la longueur du profilé.

D'autres caractéristiques et avantages de l'invention apparaîtront dans la description plus détaillée qui va suivre des diverses formes de mise en oeuvre de l'invention évoquées ci-dessus. Dans cette description on se réfèrera aux dessins schématiques annexés, sur lesquels :
La figure 1 est une coupe transversale d'une première forme de réalisation d'un joint conforme à l'invention ;
La figure 2 est une coupe analogue à la figure 1 d'une autre forme de réalisation du joint conforme à l'invention ;
Les figures 3 et 4 sont des vues analogues à la figure 1 de deux autres formes de réalisation du joint selon l'invention.

Sur toutes les figures, les organes analogues sont désignés par les mêmes chiffres de référence.

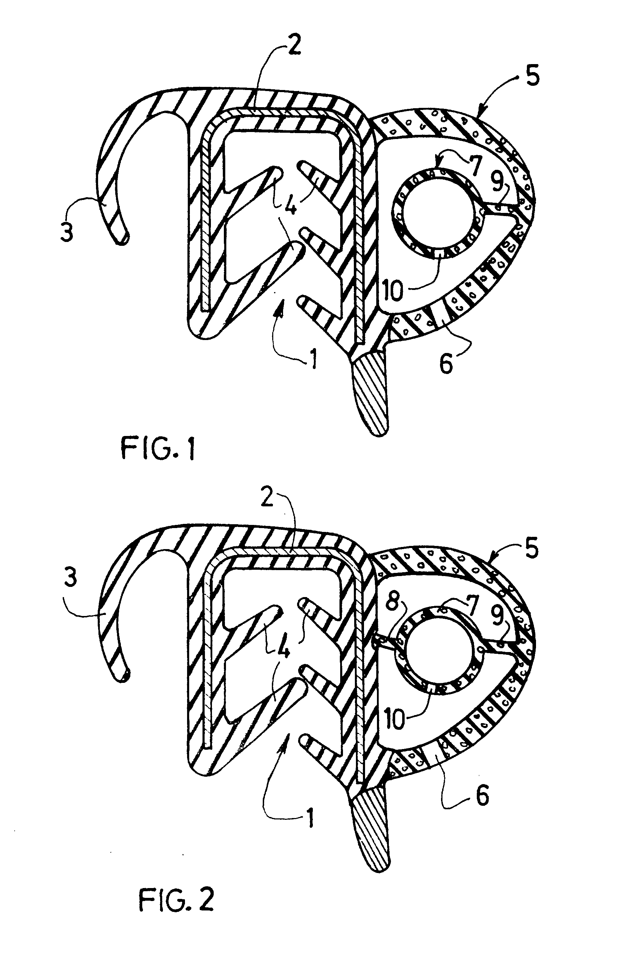

Le joint représenté sur la figure 1 comprend un profilé 1 formant pince, à section en U, en élastomère ou en plastomère, équipé d'une armature métallique 2, également à section en U, qui est destiné ici à coiffer un bord saillant d'un encadrement de porte d'automobile. Une lèvre cosmétique 3 fait saillie latéralement à partir de la base du U, tandis que des lèvres 4 en un matériau souple tel qu'un élastomère font saillie à l'intérieur du U à partir des branches de celui-ci, en vue d'enserrer fermement le bord saillant de l'encadrement de porte.

Un premier profilé tubulaire 5, par exemple en caoutchouc cellulaire, est attenant à une des branches du profilé 1 et fait saillie latéralement vers l'extérieur du véhicule, du côté opposé à la lèvre 3. Ce profilé 5 est destiné à être comprimé et déformé entre l'encadrement de porte et cette porte, en position de fermeture de celle-ci, en vue d'assurer l'étanchéité de l'habitacle et de l'insonoriser, et il est percé d'orifices 6, disposés à intervalles réguliers ou non le long du profilé, pour permettre le passage de l'air vers l'extérieur du profilé ou vers l'intérieur de celui-ci.

Ce joint peut être réalisé par une unique opération de coextrusion des profilés 1 et 5.

Conformément à l'invention, à l'intérieur du profilé tubulaire 5 est logé un second profilé tubulaire 7, de plus petites dimensions, qui est attenant par une unique cloison 9 à une partie du profilé 5 opposée à la branche du profilé 1 à laquelle ce profilé 5 est attenant.

Le profilé 7 est ainsi monté " flottant " à l'intérieur du profilé 5 et il peut donc adopter de lui-même dans ce profilé 5, la position la plus appropriée, en fonction de la situation du joint sur l'ouvrant ou l'encadrement de porte qu'il équipe.

Le profilé 7 est ici en la même matière que le profilé 5 et venu de coextrusion avec celui-ci et le profilé 1. Il est lui aussi destiné à être comprimé et déformé sous la sollicitation de l'ouvrant, en position de fermeture de celui-ci et, dans ce but, sa paroi est percée d'au moins un orifice 10.

Comme indiqué ci-dessus, en choisissant judicieusement la forme, la position et les dimensions respectives du profilé 7, qui peut ne s'étendre que suivant une portion de la longueur du profilé 5, et de la cloison 9, il est possible d'amener ce profilé 7 à venir se placer de lui-même dans une position telle qu'il épouse parfaitement le profil de l'encadrement de porte équipé de ce joint, même dans les portions d'angle à forte courbure, en amenant ainsi le profilé 5 dans la position la plus appropriée par rapport à cet encadrement de porte.

Lorsque le profilé 5 est comprimé et écrasé par l'ouvrant, en position de fermeture de celui-ci, il en est de même du profilé 7 et celui-ci forme une barrière additionnelle très efficace au passage des ondes sonores, en améliorant ainsi de façon très sensible l'insonorisation de l'habitacle du véhicule.

Dans la forme de réalisation de la figure 2, le profilé 7 est non seulement solidaire par la cloison 9 d'une portion de la paroi interne du profilé 5 opposé à la branche du profilé 1 à laquelle ce profilé 5 est attenant, mais il est également solidaire par une cloison 8 de cette branche du profilé 1. Les deux cloisons 8 et 9 sont ici sensiblement disposées dans un même plan, mais elles pourraient aussi bien être décalées transversalement l'un par rapport à l'autre. Elles pourraient aussi être attenantes à deux parties distinctes de profilé 5, en particulier lorsque celui-ci a une section transversale fermée et recouvre par conséquent une partie de la branche du profilé 1 à laquelle il est attenant.

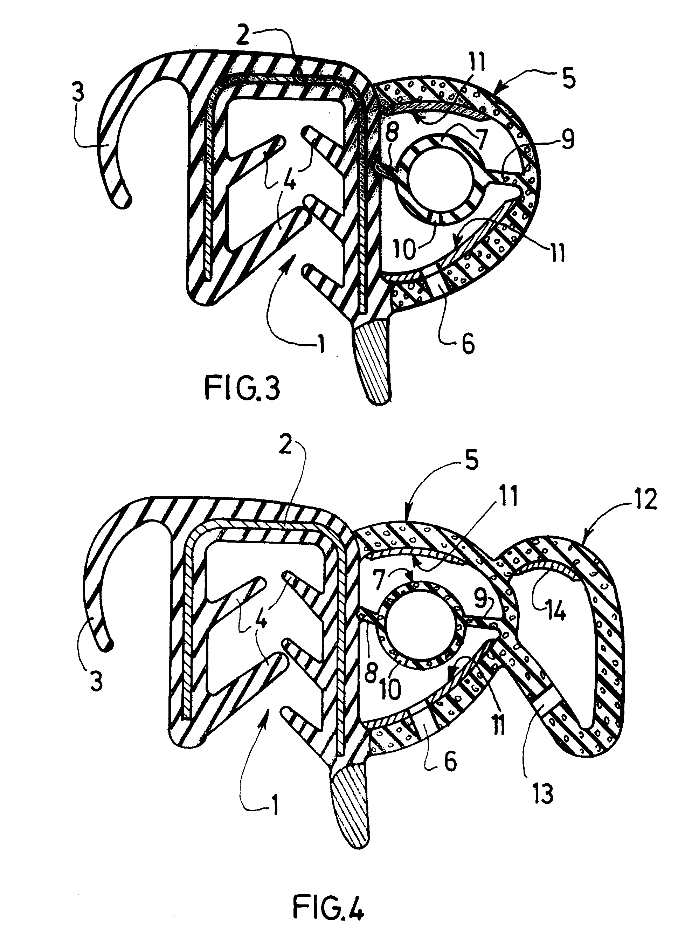

Dans la forme de réalisation de la figure 3, qui represente un joint du même type général que celui de la figure 2, le tubulaire 5 est revêtu localement, sur sa surface interne, de pellicules 11 en un matériau différent de celui du profilé 5 ou en un matériau analogue, mais présentant des caractéristiques physiques différentes, ces pellicules 11, destinées à former des barrières au passage des ondes sonores, ne s'étendant que suivant une partie de la section transversale et de la longueur du profilé 5, de manière à ne perturber que localement et de façon minime l'aptitude à la déformation de celui-ci, tout en formant des barrières supplémentaires au passage des ondes sonores.

Dans la forme de réalisation de la figure 4, enfin, un troisième profilé tubulaire 12, ici en le même matériau que celui du profilé 5 et communiquant avec l'extérieur par des orifices 13, est attenant au profilé 5 de la forme de réalisation de la figure 3.

Pour améliorer l'effet insonorisant de ce profilé 12, venu lui aussi de coextrusion avec les profilés 1, 5 et 7, sa surface interne est gainée localement par une pellicule 14 en un matériau différent de celui dont il est constitué ou analogue à celui-ci, mais ayant des caractéristiques physiques différentes, qui ne s'étend que suivant une partie de la section transversale et de la longueur de ce profilé.

Dans toutes ces formes de réalisation, on notera la grande simplicité du joint d'étanchéité conforme à l'invention qui peut être fabriqué par coextrusion de tous ses constituants, à l'exception de l'armature métallique, par des procédés bien connus de l'homme du métier.

## Revendications

1. Joint d'étanchéité destiné à équiper un ouvrant d'un véhicule automobile ou un encadrement d'une ouverture de la carrosserie associée à cet ouvrant, ce joint comprenant au moins un premier profilé tubulaire (5) en un matériau déformable élastiquement, attenant à la base ou à une aile latérale d'une partie (1) à section transversale en U formant pince, en élastomère ou en plastomère, destinée à coiffer un rebord saillant de l'ouvrant ou respectivement de l'encadrement de l'ouverture associée, avec le premier profilé tubulaire (5) faisant saillie, respectivement, en direction de l'encadrement de l'ouverture ou de l'ouvrant, de manière à être comprimé en se déformant entre ces deux organes en position de fermeture de l'ouvrant, un second profilé tubulaire (7) de plus petites dimensions, en un matériau déformable élastiquement, étant logé à l'intérieur du premier profilé tubulaire (5) et étant attenant par au moins une cloison (8, 9) à au moins à une portion de celui-ci, le second profilé tubulaire (7) étant lui aussi destiné à être comprimé en se déformant sous la sollicitation de l'ouvrant, en position de fermeture de celui-ci, ce profilé étant **caractérisé en ce qu'**au moins un orifice (6) est ménagé dans la paroi du premier profilé tubulaire (5), tandis qu'au moins un orifice (10) est ménagé dans la paroi du second profilé tubulaire (7), pour permettre le passage de l'air vers l'intérieur ou l'extérieur des profilés.

2. Joint selon la revendication 1, **caractérisé en ce que** le second profilé tubulaire (7) s'étend suivant seulement une partie de la longueur du premier profilé tubulaire (5).

3. Joint selon l'une des revendications 1 et 2, **caractérisé en ce que** le second profilé tubulaire (7) est attenant par une unique cloison (9) à une portion du premier profilé tubulaire (5) opposée à la portion de la partie (1) formant pince à laquelle ce premier profilé (5) est attenant.

4. Joint selon l'une des revendications 1 et 2, **caractérisé en ce que** le second profilé tubulaire (7) est attenant par deux cloisons (8, 9) à deux parties distinctes du premier profilé tubulaire (5), ou à une portion de celui-ci et à une portion de la base ou de la branche de la partie (1) formant pince à laquelle est attenant ce premier profilé tubulaire.

5. Joint selon la revendication 4, **caractérisé en ce que** les deux cloisons (8, 9) sont sensiblement dans un même plan.

6. Joint selon la revendication 4, **caractérisé en ce que** les deux cloisons (8, 9) sont décalées l'une par rapport à l'autre.

7. Joint selon l'une des revendications 1 à 6, **caractérisé en ce que** le premier et/ou le second profilés tubulaires (5 7) sont gainés localement, sur leur surface externe et/ou interne, d'au moins une pellicule (11) en un matériau différent de celui dont ils sont constitués, ou en le même matériau, mais possédant des propriétés physiques différentes, cette pellicule ne s'étendant que suivant une partie de la section transversale et de la longueur du profilé associé.

8. Joint selon l'une des revendications 1 à 7, **caractérisé en ce qu'**un troisième profilé tubulaire (12) en un matériau déformable élastiquement, percé d'au moins un orifice (13), est attenant extérieurement au premier profilé tubulaire (5) en une position telle qu'il puisse être comprimé et déformé par l'ouvrant, en position de fermeture de celui-ci.

9. Profilé selon la revendication 8, **caractérisé en ce que** le troisième profilé (12), est gainé localement, sur sa surface externe et/ou interne, d'au moins une pellicule (14) en un matériau différent de celui dont il est constitué, ou en le même matériau, mais possédant des propriétés physiques différentes, cette pellicule ne s'étendant que suivant une partie de la section transversale et de la longueur du troisième profilé (12).

10. Profilé selon l'une des revendications 1 à 9, **caractérisé en ce que** la partie formant pince (1), le premier profilé tubulaire (5), le second profilé tubulaire (7), les cloisons (8, 9) attenantes à ce dernier, éventuellement le troisième profilé (12) et les pellicules (11, 14) associées sont venus de coextrusion.
